(19)

Europäisches
Patentamt

European
Patent Office

Office européen
des brevets

(11) **EP 2 554 254 A2**

(12) **EUROPEAN PATENT APPLICATION**
published in accordance with Art. 153(4) EPC

(43) Date of publication:
06.02.2013 Bulletin 2013/06

(21) Application number: **10849079.8**

(22) Date of filing: **14.12.2010**

(51) Int Cl.:
**B01J 23/62** (2006.01)       **B01J 37/08** (2006.01)
**H01M 4/90** (2006.01)       **H01M 8/10** (2006.01)

(86) International application number:
**PCT/KR2010/008923**

(87) International publication number:
**WO 2011/122757 (06.10.2011 Gazette 2011/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2010   KR 20100029038**

(71) Applicant: **Gwangju Institute of Science and
Technology
Gwangju-city 500-712 (KR)**

(72) Inventors:
• **KIM, Won Bae**
  **Gwangju 500-712 (KR)**
• **KIM, Yong Seok**
  **Gwangju 500-712 (KR)**

(74) Representative: **Noel, Chantal Odile et al
Cabinet Orès
36, rue de St Pétersbourg
75008 Paris (FR)**

(54) **METHOD FOR MANUFACTURING A MIXED CATALYST CONTAINING A METAL OXIDE
NANOWIRE, AND ELECTRODE AND FUEL CELL INCLUDING A MIXED CATALYST
MANUFACTURED BY THE METHOD**

(57)     Provided is a method for manufacturing a mixed catalyst containing a metal oxide nanowire, and an electrode and a fuel cell which include a mixed catalyst manufactured by the method. The method includes: forming a metal/polymer nanowire by electrospinning a polymer solution containing a first metal precursor and a second metal precursor; forming a metal oxide nanowire by heat-treating the metal/polymer mixture nanowire; and mixing the metal oxide nanowire with active metal nanoparticles. Here, the metal of the second metal precursor is used as a dopant for the metal oxide nanowire. In the event an electrode catalyst layer of a fuel cell is formed using the manufactured mixed catalyst, the fuel cell has the advantages of significantly improved performance and reduced costs in generating electricity.

Fig. 1

```
┌──────────────────────────────────────────┐
│ Preparing polymer solution containing     │ ⟋ S10
│ first metal precursor and second metal    │
│ precursor                                 │
└──────────────────────────────────────────┘
                    │
                    ▼
┌──────────────────────────────────────────┐
│ Electrospinning polymer solution to form  │ ⟋ S12
│ metal-polymer nanowire                    │
└──────────────────────────────────────────┘
                    │
                    ▼
┌──────────────────────────────────────────┐
│ Heat treating metal-polymer nanowire      │ ⟋ S14
│ to form metal oxide nanowire              │
└──────────────────────────────────────────┘
                    │
                    ▼
┌──────────────────────────────────────────┐
│ Mixing metal oxide nanowire               │ ⟋ S16
│ with active metal nanoparticles           │
└──────────────────────────────────────────┘
```

EP 2 554 254 A2

**Description**

[Technical Field]

The present invention relates a catalyst preparation method and application of the prepared catalyst, and more particularly, to a method for manufacturing a mixed catalyst containing metal oxide nanowire and applications of the prepared catalyst to fuel cell electrodes and fuel cell systems.

[Background Art]

A fuel cell is an electrochemical cell that converts chemical energy produced by oxidation of fuel into electrical energy through electrochemical reaction. With merits of high energy density and environmental friendliness, fuel cells have attracted attention as a future energy storage medium.
Currently, a fuel cell generally employs a supported catalyst, in which an active metal for the catalyst is supported on a porous carbon supporter, to increase an active area of the catalyst in a catalyst layer. However, a conventional supported catalyst is prepared in the form of particles and is connected via point contact, thereby causing increase in electrode resistance. Moreover, as the amount of catalyst placed on electrodes increases, the thickness of the catalyst layer increases, thereby causing resistance increase.

[Disclosure]

[Technical Problem]

The present invention is aimed at providing a method for manufacturing a mixed catalyst, which can enhance charge transport capabilities, activity and stability of the catalyst.
In addition, the present invention is aimed at providing a fuel cell electrode and a fuel cell, which include a mixed catalyst exhibiting excellent properties.

[Technical Solution]

One aspect of the present invention provides a method for manufacturing a mixed catalyst containing a metal oxide nanowire. The method includes: preparing a polymer solution containing a first metal precursor and a second metal precursor; electrospinning the polymer solution to form a metal-polymer nanowire; heat treating the metal-polymer nanowire to form a metal oxide nanowire; and mixing the metal oxide nanowire with active metal nanoparticles. Here, the metal of the second metal precursor is used as a dopant for the metal oxide nanowire.
The first metal precursor may include at least one metal selected from Sn, Ti, Zn, Ni, Co, Mn, Nb, Mo, V, Cr, Fe, Ru, In, Al, Sb, Ta, and Eu.
The second metal precursor may include at least one metal selected from Pt, Pd, Au, Ag, Rh, Os, Ir, Sn, Ti, Zn, Ni, Co, Mn, Nb, Mo, V, Cr, Fe, Ru, In, Al, Sb, Ta, and Eu.
The active metal nanoparticles may include any one component selected from Pt, Au, Ag, Fe, Co, Ni, Ru, Os, Rh, Pd, Ir, W, Sn, Pd, Bi, and alloys thereof, and may be porous carbon nanoparticles supporting an active metal.
A polymer of the polymer solution may be any one selected from polyvinyl pyrrolidone, polyvinyl butyral, polyvinyl acetate, polyacrylonitrile, polycarbonate, and mixtures thereof.
The first metal precursor may be a tin (Sn) salt and the second metal precursor may be an antimony (Sb) salt.
Another aspect of the present invention provides an electrode for fuel cells. The electrode for fuel cells includes an electrode matrix and a catalyst layer formed on the electrode matrix, wherein the catalyst layer includes an active metal nanoparticle layer and a metal oxide nanowires inserted into the active metal nanoparticle layer. Here, the metal oxide nanowire is prepared by doping with a heterogeneous metal.
The electrode matrix may be any one selected from carbon paper, carbon cloth, and carbon felt.
The metal oxide nanowire may include at least one selected from Sn, Ti, Zn, Ni, Co, Mn, Nb, Mo, V, Cr, Fe, Ru, In, Al, Sb, Ta, and Eu.
The heterogeneous metal may include at least one selected from Pt, Pd, Au, Ag, Rh, Os, Ir, Sn, Ti, Zn, Ni, Co, Mn, Nb, Mo, V, Cr, Fe, Ru, In, Al, Sb, Ta, and Eu.
The active metal nanoparticles may include any one component selected from Pt, Au, Ag, Fe, Co, Ni, Ru, Os, Rh, Pd, Ir, W, Sn, Pd, Bi, and alloys thereof, and may be porous carbon nanoparticles supporting an active metal.
The metal oxide nanowire may be a tin oxide nanowire and the heterogeneous metal may be antimony.
A further aspect of the present invention provides a fuel cell. The fuel cell includes an anode and a cathode facing each other, and an electrolyte interposed between the anode and the cathode. Here, at least one of the anode and the cathode is the electrode for fuel cells as described above.

[Advantageous Effects]

As described above, according to the present invention, a metal oxide nanowire may be prepared by a simple process based on electrospinning, and a mixed catalyst exhibiting excellent properties may be prepared simply by mixing the metal oxide nanowire with active metal nanoparticles. Specifically, the metal oxide nanowire of the mixed catalyst has high charge transport capabilities and may increase catalyst activity while improving catalyst stability. Thus, when an electrode catalyst layer of a fuel cell is formed using the mixed catalyst, it is possible to achieve significant improvement in performance of the fuel cell while reducing manufacturing cost.

It should be understood that the present invention is not limited to these effects and other advantageous effects will become apparent to those skilled in the art from the following description.

[Description of Drawings]

Fig. 1 is a flowchart of a method for manufacturing a mixed catalyst in accordance with one embodiment of the present invention.

Fig. 2 is a diagram of a method of preparing metal-polymer nanowires via an electrospinning process.

Fig. 3 is a schematic view of an electrode for fuel cells in accordance with one embodiment of the present invention.

Fig. 4 is a schematic view of a fuel cell in accordance with one embodiment of the present invention.

Figs. 5 and 6 are SEM images of nanowires prepared in Preparative Example 1 and Comparative Example 1.

Figs. 7 and 8 are TEM images of the nanowires prepared in Preparative Example 1 and Comparative Example 1.

Fig. 9 is an XRD pattern of the nanowires prepared in Preparative Example 1 and Comparative Example 1.

Fig. 10 is a current-voltage curve of the nanowires prepared in Preparative Example 1 and Comparative Example 1.

Figs. 11 and 12 are SEM images of an electrode catalyst layer prepared with an ATO nanowire-Pt/C mixed catalyst ink.

Figs. 13 and 14 are graphs depicting impedance variation according to oxidation of ethanol (Fig. 13) and methanol (Fig. 14) of an ATO nanowire-Pt/C mixed catalyst in an alkali atmosphere.

Figs. 15 and 16 are graphs depicting impedance variation according to oxidation of ethanol (Fig. 15) and methanol (Fig. 16) of an ATO nanowire-Pt/C mixed catalyst in an acidic atmosphere.

Figs. 17 and 18 are cyclic voltammetry graphs according to oxidation of ethanol (Fig. 17) and methanol (Fig. 18) of an ATO nanowire-Pt/C mixed catalyst in an alkali atmosphere.

Fig. 19 is a cyclic voltammetry graph for measuring hydrogen adsorption/desorption capability of an ATO nanowire-Pt/C mixed catalyst in an alkali atmosphere.

Figs. 20 and 21 are electrostatic graphs according to oxidation of ethanol (Fig. 20) and methanol (Fig. 21) of an ATO nanowire-Pt/C mixed catalyst in an alkali atmosphere.

[Best Mode ]

Exemplary embodiments of the present invention will now be described with reference to the accompanying drawings. It should be understood that the present invention is not limited to the following embodiments and may be embodied in different ways. Rather, the following embodiments are given to provide complete disclosure of the invention and to provide thorough understanding of the invention to those skilled in the art. In the drawings, the thicknesses of layers and regions are exaggerated for clarity. Like components will be denoted by like reference numerals throughout the specification. In the following description, detailed description of functions or elements apparent to those skilled in the are will be omitted for clarity.

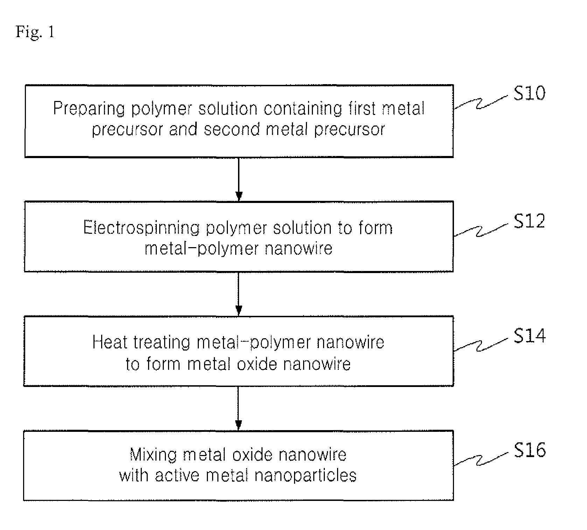

Fig.1 is a flowchart of a method for manufacturing a mixed catalyst in accordance with one embodiment of the present invention.

Referring to Fig. 1, a polymer solution containing a first metal precursor and a second metal precursor is prepared (S10). The first metal precursor may include at least one metal selected from Sn, Ti, Zn, Ni, Co, Mn, Nb, Mo, V, Cr, Fe, Ru, In, Al, Sb, Ta, and Eu, without being limited thereto. The second metal precursor may include at least one metal selected from Pt, Pd, Au, Ag, Rh, Os, Ir, Sn, Ti, Zn, Ni, Co, Mn, Nb, Mo, V, Cr, Fe, Ru, In, Al, Sb, Ta, and Eu, without being limited thereto. In this case, the metal for the second metal precursor is used as a dopant for metal oxide nanowires described below and is different than the metal for the first metal precursor. Specifically, each of the first metal precursor and the second metal precursor may be prepared in the form of a metal salt. For example, when the first metal precursor contains tin (Sn), the first metal precursor may be prepared in the form of a tin salt (for example, tin chloride such as $SnCl_2$ or $SnCl_4$), when the second metal precursor contains antimony (Sb), the second metal precursor may be prepared in the form of an antimony salt (for example, antimony chloride such as $SbCl_3$).

The polymer for the polymer solution may be any one selected from polyvinylpyrrolidone (PVP), polyvinyl butyral (PVB), polyvinyl acetate (PVA), polyacrylonitrile (PAN), polycarbonate (PC), and mixtures thereof, without being limited thereto. In addition, the solvent for the polymer solution may be a polar solvent selected from water, methanol, ethanol, acetone, *N,N'*-dimethylformamide (DMF), dimethylsulfoxide (DMSO), N-methylpyrrolidone(NMP), methylene chloride ($CH_2Cl_2$), chloroform ($CH_3Cl$), tetrahydrofuran (THF), or mixtures thereof. For example, the polymer solution containing the first and second metal precursors may be prepared by mixing a methanol solution containing a tin salt as the first metal precursor and an antimony salt as the second metal precursor with a methanol solution containing PVP.

Then, a metal-polymer nanowire is prepared by electrospinning the polymer solution (S 12).

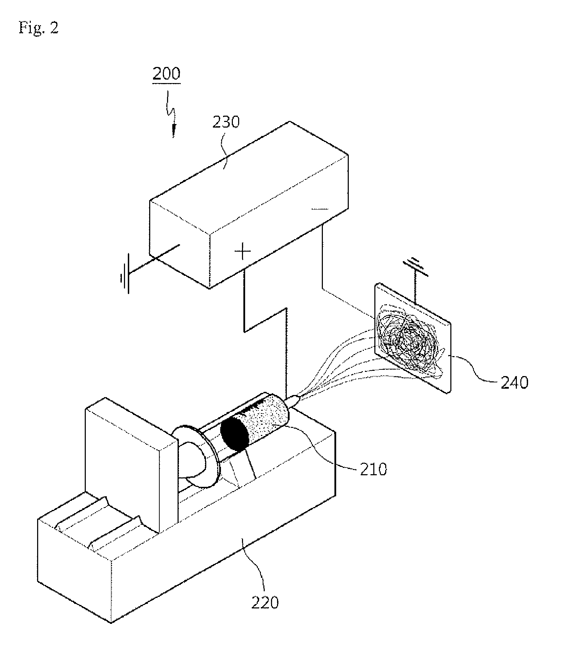

Fig. 2 is a diagram of a method of preparing metal-polymer nanowires via an electrospinning process. Referring to Fig. 2, an electrospinner 200 may include a syringe 210, a syringe pump 220, a high voltage generator 230, and a collector 240. Electrospinning may be carried out by ejecting the polymer solution (spinning solution) through the syringe 210 at a predetermined speed using the pump 220 while applying a predetermined voltage via the high voltage generator 230. As a result, metal-polymer nanowires having a diameter of a few to several hundred nanometers may be formed on the collector 240 of the electrospinner 200. The metal-polymer nanowires may be prepared to have various characteristics through combination of various conditions, such as the kinds of metal precursors and polymers used, the ratio of substances constituting the spinning solution, density and viscosity of the spinning solution, spinning conditions, and the like.

Referring again to Fig. 1, the metal-polymer nanowires are subjected to heat treatment to form a metal oxide nanowire (S14). Heat treatment may be carried out under an air atmosphere, and temperature and time for heat treatment may be suitably selected in consideration of the melting points of the metals and the dissociation points of the polymers contained in the nanowire. The suitable temperature for heat treatment may be measured through, for example, differential scanning calorimetry (DSC). Since the polymer and impurities are removed from the metal-polymer nanowire through heat treatment, homogeneous metal oxide nanowires may be formed.

Then, the metal oxide nanowires are mixed with active metal nanoparticles (S16). The active metal nanoparticles may include any one component selected from Pt, Au, Ag, Fe, Co, Ni, Ru, Os, Rh, Pd, Ir, W, Sn, Pd, Bi, and mixtures thereof. In addition, the active metal nanoparticles may be comprised of porous carbon nanoparticles supporting an active metal. For example, the active metal nanoparticles may be comprised of porous carbon nanoparticles supporting platinum. Mixing may be carried out by dispersing the metal oxide nanowires and the active metal nanoparticles in a solvent using a vortex mixer or sonication and stirring.

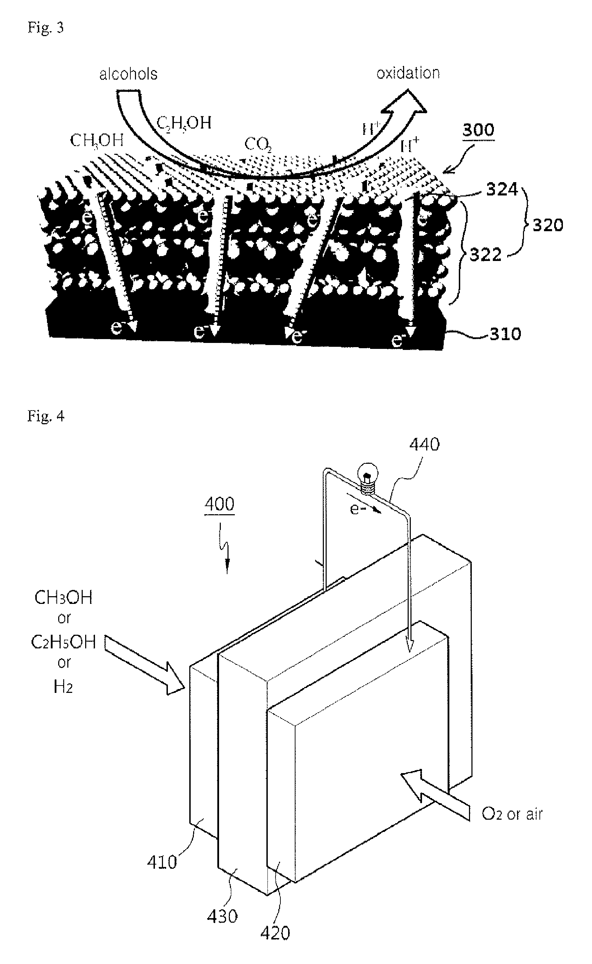

Fig. 3 is a schematic view of an electrode for fuel cells in accordance with one embodiment of the present invention.

Referring to Fig. 3, an electrode for fuel cells 300 includes an electrode matrix 310 and a catalyst layer 320, which is placed on the electrode matrix 310 and includes an active metal nanoparticle layer 322 and metal oxide nanowires 324 inserted into the active metal nanoparticle layer 322. Here, the metal oxide nanowires 324 are prepared by doping with a heterogeneous metal.

The electrode matrix 310 serves not only as a supporter of the catalyst layer 320, but also as a current collector and a passage of reactants and products. Accordingly, the electrode matrix 310 is a porous supporter. For example, the electrode matrix 310 may be carbon paper, carbon cloth, or carbon felt.

The active metal nanoparticles of the active metal nanoparticle layer 322 may be comprised any one component selected from Pt, Au, Ag, Fe, Co, Ni, Ru, Os, Rh, Pd, Ir, W, Sn, Pd, Bi, and mixtures thereof. In addition, the active metal nanoparticles may be comprised of porous carbon nanoparticles supporting an active metal. For example, the active metal nanoparticles may be comprised of porous carbon nanoparticles supporting platinum.

The metal oxide nanowires 324 may be comprised of at least one metal selected from Sn, Ti, Zn, Ni, Co, Mn, Nb, Mo, V, Cr, Fe, Ru, In, Al, Sb, Ta, and Eu. The heterogeneous metal used as a dopant for the metal oxide nanowire may include at least one metal selected from Pt, Pd, Au, Ag, Rh, Os, Ir, Sn, Ti, Zn, Ni, Co, Mn, Nb, Mo, V, Cr, Fe, Ru, In, Al, Sb, Ta, and Eu. For example, the metal oxide nanowires may be comprised of tin (Sn) oxide, and the heterogeneous metal may be antimony (Sb).

In particular, the catalyst layer 320 may be formed using the mixed catalyst prepared by the method described with reference to Fig. 1 (and Fig. 2). In one embodiment, the catalyst layer 320 may be formed by mixing the mixed catalyst prepared by the method according to the invention with an ionomer binder solution, followed by depositing and drying the mixture on the electrode matrix 310.

As shown in Fig. 3, in the catalyst layer 320 of the electrode for fuel cells 300 according to this embodiment, the metal oxide nanowires 324 doped with a heterogeneous metal and having a high charge transport capability is dispersed in the active metal nanoparticle layer 322. Thus, when the electrode 300 is used as an anode or a cathode of a fuel cell, it is possible to enhance transport capabilities of electrons generated by fuel oxidation or introduced through an external circuit.

Fig. 4 is a schematic view of a fuel cell in accordance with one embodiment of the present invention.

Referring to Fig. 4, a fuel cell 400 includes an anode 410 and a cathode 420 facing each other, and an electrolyte 430 interposed between and the anode 410 and the cathode 420. Here, at least one of the anode 410 and the cathode 420 is constituted by the electrode for fuel cells 300 described with reference to Fig. 3.

The electrolyte 430 may be an acid or alkali electrolyte, and the fuel cell 400 may employ hydrogen, methanol or ethanol as fuel.

For example, Formula 1 represents an electrochemical reaction when using an acid electrolyte and ethanol as fuel, and Formula 2 represents an electrochemical reaction when using an alkali electrolyte and hydrogen as fuel.

$$<Formula\ 1>$$

$$anode:\ CH_3CH_2OH + 3H_2O \rightarrow 2CO_2 + 12H^+ + 12e^- \quad E^o = 0.085V$$

$$cathode:\ 3O_2 + 12H^+ + 12e^- \rightarrow 6H_2O \quad E^o = 1.23V$$

$$Total\ reaction:\ CH_3CH_2OH + 3O_2 \rightarrow 2CO_2 + 3H_2O \quad E^o = 1.145V$$

$$<Formula\ 2>$$

$$anode:\ H_2 + 2OH^- \rightarrow 2H_2O + 2e^- \quad E^o = -0.83V$$

$$cathode:\ 1/2O_2 + H_2O + 2e^- \rightarrow 2OH^- \quad E^o = 0.40V$$

$$Total\ reaction:\ H_2 + 1/2O_2 \rightarrow H_2O \quad E^o = 1.23V$$

As can be seen from these formulae, when supplied into the anode 410 of the fuel cell 400, fuel is oxidized on the anode 410 by electrochemical reaction to generate electrons, which in turn are transferred to the cathode 420 through an external circuit 440 to generate electricity. Further, reduction of oxygen occurs on the cathode 420 while consuming the electrons transferred to the cathode 420. Accordingly, when at least one of the anode 410 and the cathode 420, preferably at least the anode 410, is embodied by the electrode 300 described with reference to Fig. 3, charge transport capabilities may be improved by the metal oxide nanowires 324 introduced into the electrode catalyst layer 300, thereby enabling performance improvement of the fuel cell.

Next, the present invention will be described in more detail with reference to examples. It should be understood that the following examples are provided for illustration only and do not limit the scope of the present invention.

<Preparative Example 1 >

Preparation of ATO nanowire (antimony-doped tin oxide nanowire)

0.15 g of $SnCl_2 \cdot 2H_2O$ and 0.03 g of $SbCl_3 \cdot 2H_2O$ each were dissolved in 1 ml of methanol and mixed with each other. The mixture was mixed with a PVP (polyvinyl pyrrolidone) solution obtained by dissolving 0.3 g of PVP in 6 ml of methanol to prepare an electrospinning solution. Then, the prepared electrospinning solution was placed in a syringe of an electrospinning device as shown in Fig. 2, and ejected at a rate of 0.7 ml/h using a pump. At this time, a high voltage of about 9.5 kV was applied to the ejected fluid, whereby metal-polymer nanowires containing a mixture of antimony, tin and PVP were collected by a collector. The collected metal-polymer nanowires having a diameter of about 300 nm were heat treated (burnt) at 600 °C for 5 hours in an air atmosphere, thereby preparing ATO nanowires, from which the polymer was removed.

Preparation of ATO nanowire-Pt/C mixed catalyst ink

The prepared ATO nanowires and Pt/C (20 wt%) each were suitably dispersed in 1 ml of deionized water (DI water). The dispersing solutions was mixed with each other such that the weight ratio of ATO nanowires to Pt became 0.5:1, followed by mixing for 6 hours or more using a vortex mixer, thereby preparing a catalyst ink.

Next, the catalyst ink was mixed with a Nation solution as a binder such that the weight ratio of Pt to Nafion became 9:1, followed by stirring for 3 hours or more and sonication.

<Comparative Example 1: Preparation of TO (tin oxide) nanowire >

0.15 g of $SnCl_2 \cdot 2H_2O$ was dissolved in 2 ml of methanol and mixed with a PVP solution obtained by dissolving 0.3 g of PVP in 6 ml of methanol to prepare an electrospinning solution. Then, the prepared electrospinning solution was placed in a syringe of an electrospinning device as shown in Fig. 2, and ejected at a rate of 0.7 ml/h using a pump. At this time, a high voltage of about 9.5 kV was applied to the ejected fluid, whereby metal-polymer nanowires containing a mixture of tin and PVP were collected by a collector. The collected metal-polymer nanowires were heat treated (burnt) at 600°C for 5 hours in an air atmosphere, thereby preparing TO nanowires, from which the polymer was removed.

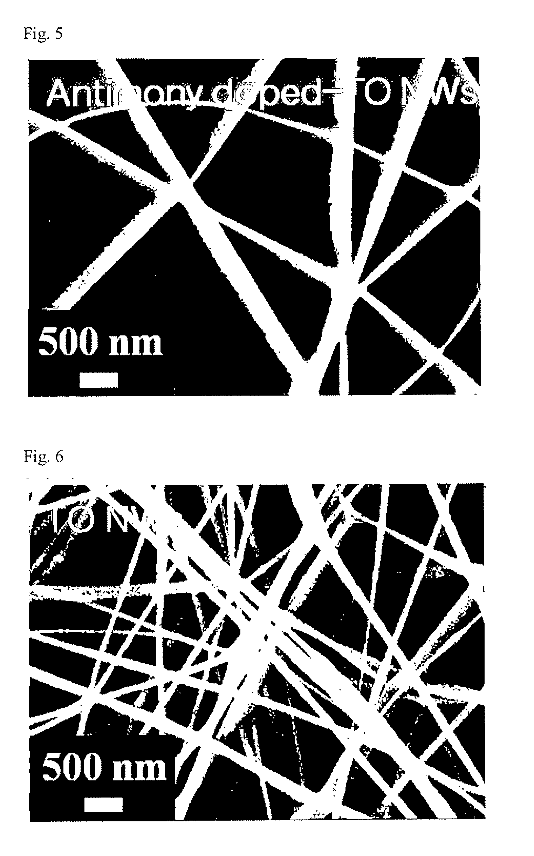

Figs. 5 and 6 are SEM images of nanowires prepared in Preparative Example 1 and Comparative Example 1.

Referring to Figs. 5 and 6, the ATO nanowires (Preparative Example 1) had a diameter of about 100 nm and the TO nanowires (Comparative Example 1) had a diameter of about 50 nm. In addition, the diameter of the nanowires after burning was decreased below the diameter of the nanowires (not shown) before burning, and this phenomenon means that the polymer (PVP) was removed from the nanowires through burning.

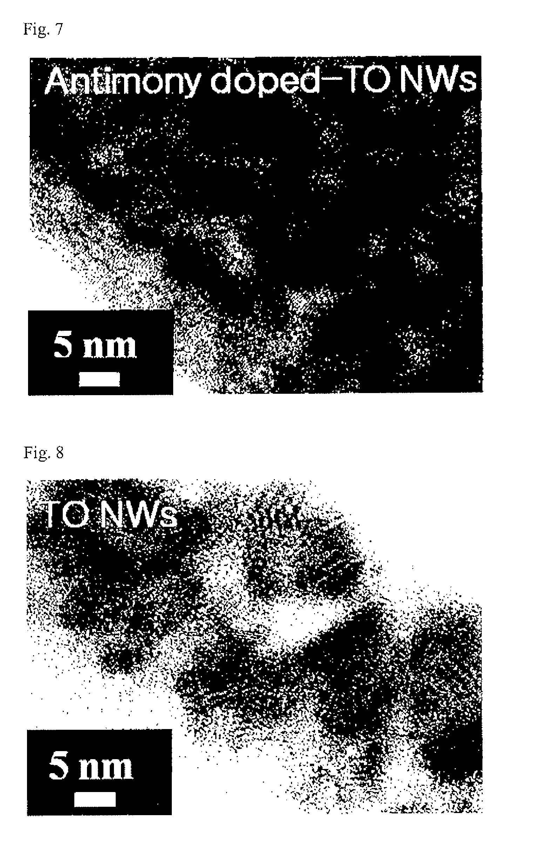

Figs. 7 and 8 are TEM images of the nanowires prepared in Preparative Example 1 and Comparative Example 1.

Referring to Fig. 7 and Fig. 8, the TO nanowires (Comparative Example 1) have a morphology with poor porosity, whereas the ATO nanowires (Preparative Example 1) have a good morphology with higher density and packing state by doping with antimony (Sb). Such improvement of the morphology may contribute to enhancement of charge transport capabilities.

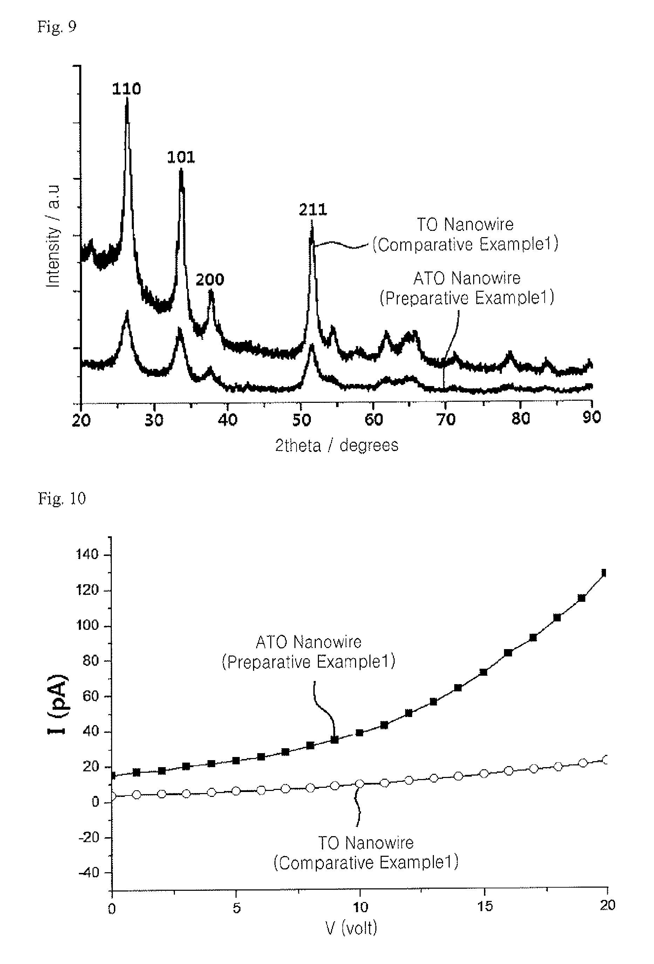

Fig. 9 is an XRD patter of the nanowires prepared in Preparative Example 1 and Comparative Example 1.

As shown in Fig. 9, the ATO nanowires (Preparative Example 1) and the TO nanowires (Comparative Example 1) exhibited similar X-ray diffraction patterns, and thus it could be seen that the ATP nanowires prepared in Preparative Example 1 contain antimony in a stably doped state into the tin oxide without phase separation.

Fig. 10 is a current-voltage curve of the nanowires prepared in Preparative Example 1 and Comparative Example 1.

Referring to Fig. 10, it could be seen that the ATO nanowires (Preparative Example 1) exhibited higher current than the TO nanowires (Comparative Example 1) at the same voltage and thus conductivity was significantly improved by doping with antimony.

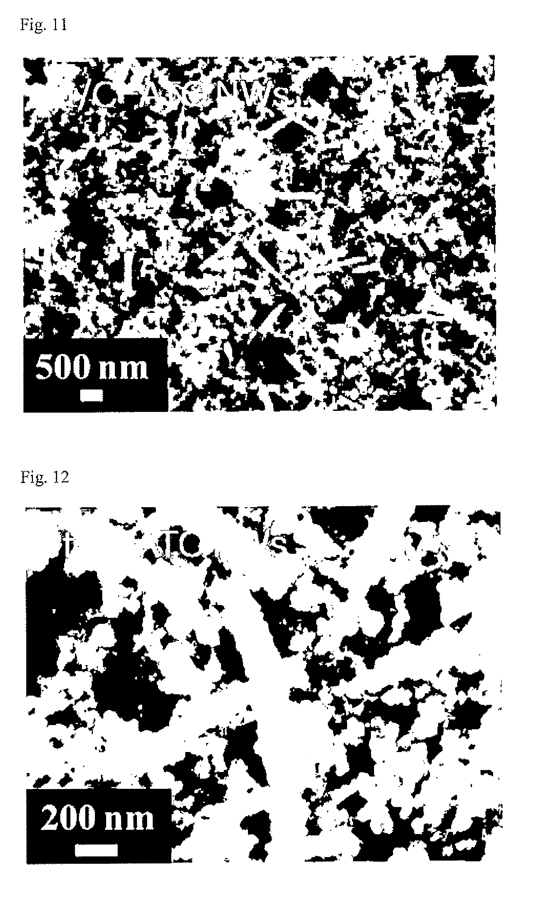

Figs. 11 and 12 are SEM images of an electrode catalyst layer prepared with the ATO nanowire-Pt/C mixed catalyst ink.

Referring to Figs. 11 and 12, it could be seen that the ATO nanowires and the Pt/C were very uniformly mixed. In this case, since the ATO nanowires can be broken during dispersion for preparation of the catalyst ink, the length of the ATO nanowires can be shortened below the length of the initially prepared ATO nanowires.

<Preparative Example 2>

The catalyst ink was prepared by the same method as in Preparative Example 1 except that the dispersing solutions of the ATO nanowires and Pt/C were mixed with each other such that the weight ratio of ATO nanowire:Pt became 1:1.

<Preparative Example 3>

The catalyst ink was prepared by the same method as in Preparative Example 1 except that the dispersing solutions of the ATO nanowires and Pt/C were mixed with each other such that the weight ratio of ATO nanowire:Pt became 2:1.

<Preparative Example 4>

The catalyst ink was prepared by the same method as in Preparative Example I except that the dispersing solutions of the ATO nanowires and Pt/C was mixed with each other such that the weight ratio of ATO nanowire:Pt became 4:1.

<Comparative Example 2: Preparation of mono-Pt/C catalyst ink>

Pt/C (20 wt%) was suitably dispersed in 2 ml of deionized water, thereby preparing a Pt/C catalyst ink.

Then, the catalyst ink was mixed with a Nafion solution as a binder such that the weight ratio of Pt to Nation became 9:1, followed by stirring and sonication.

<Comparative Example 3: Preparation of mono-ATO nanowire catalyst ink>

The ATO nanowires prepared in Preparative Example 1 were suitably dispersed in 2 ml of deionized water, thereby preparing an ATO nanowire catalyst ink.

Then, the catalyst ink was mixed with a Nafion solution as a binder such that the weight ratio of ATO nanowire to Nafion became 9:1, followed by stirring and sonication.

<Analysis Example 1: Impedance analysis for evaluation of charge transport capability of electrode catalyst >

Impedance analysis was carried out using a three-electrode cell, and one of the catalyst inks prepared in Preparative Examples 1 to 4 and Comparative Example 2 was deposited and dried on a working electrode, followed by analysis. Drying was carried out at 70°C for 1 hour.

The electrolyte was prepared by mixing potassium hydroxide (alkali atmosphere) or sulfuric acid (acid atmosphere) with ethanol or methanol in deionized water, and impedance was measured in a constant potential of -0.3V vs. SCE (alkali atmosphere) or 0.4V vs. Ag/AgCl (acid atmosphere).

[In this analysis example and the following analysis examples, the three-electrode cell employed a saturated calomel electrode (SCE) or an Ag/AgCl electrode as a reference electrode, a platinum wire as a counter electrode, and a glassy carbon having an area of 0.07 cm$^2$ as a working electrode. The working electrode was treated to contain platinum (Pt) in an amount of $25\mu$g/cm$^2$ to minimize influence of the Pt catalyst.]

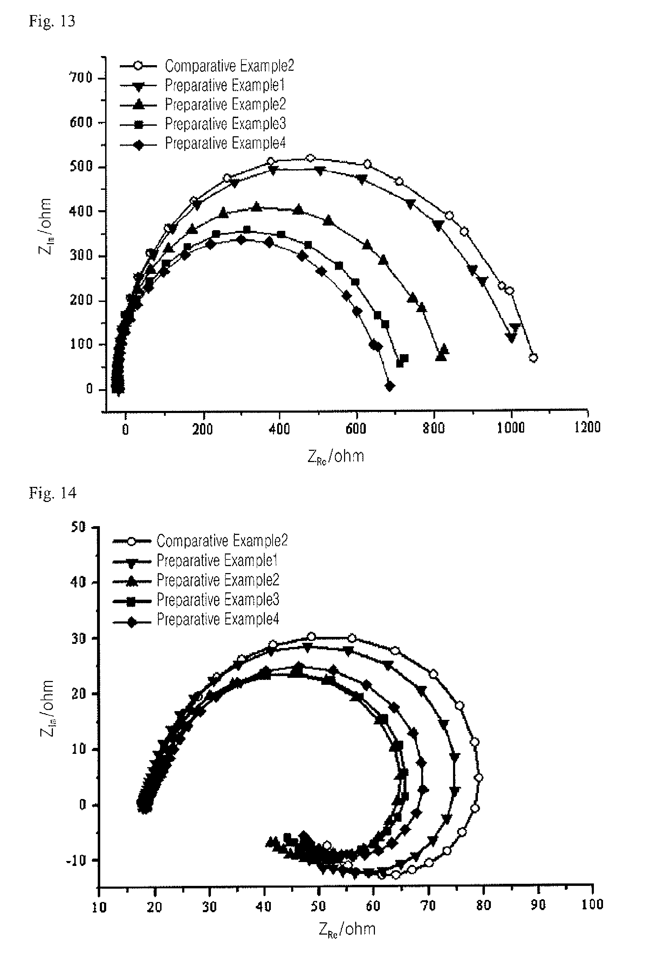

Figs. 13 and 14 are graphs depicting impedance variation (potential = -0.3 V vs. SCE) according to oxidation of ethanol (Fig. 13) and methanol (Fig. 14) of an ATO nanowire-Pt/C mixed catalyst in an alkali atmosphere.

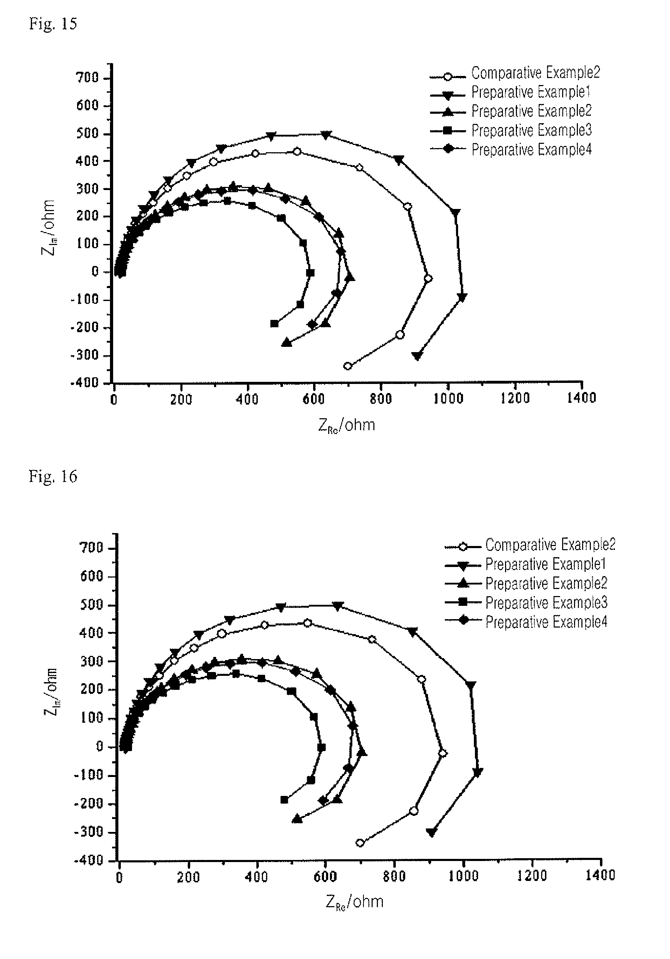

Figs. 15 and 16 are graphs depicting impedance variation (potential = 0.4V vs. Ag/AgCl) according to oxidation of ethanol (Fig. 15) and methanol (Fig. 16) of an ATO nanowire-Pt/C mixed catalyst in an acidic atmosphere

Referring to Figs. 13 to 16, since the catalysts prepared in Preparative Examples 1 to 4 have smaller diameters of semicircles meaning higher charge transport capabilities than the catalyst prepared in Comparative Example 2, it could be seen that the ATO nanowire-Pt/C mixed catalysts have superior charge transport capabilities to the mono Pt/C catalyst. In addition, since the diameters of the semicircles gradually decrease in the order of Preparative Example 1 to Preparative Example 4, it could be seen that a higher amount of ATO nanowires resulted in a further improved charge transport capabilities.

<Analysis Example 2: Cyclic voltammetry analysis for evaluation of catalyst activity>

Cyclic voltammetry analysis was carried out using a three-electrode cell, and one of the catalyst inks prepared in Preparative Examples 1 to 4 and Comparative Examples 2 and 3 was deposited and dried on a working electrode, followed by analysis. Drying was carried out at 70 °C for 1 hour.

The electrolyte was prepared by mixing potassium hydroxide (alkali atmosphere) or sulfuric acid (acid atmosphere) with ethanol or methanol in deionized water, and scanning was carried out in a potential range of -0.8 ~ 0.2V vs. SCE at a constant rate of 50 mV/s.

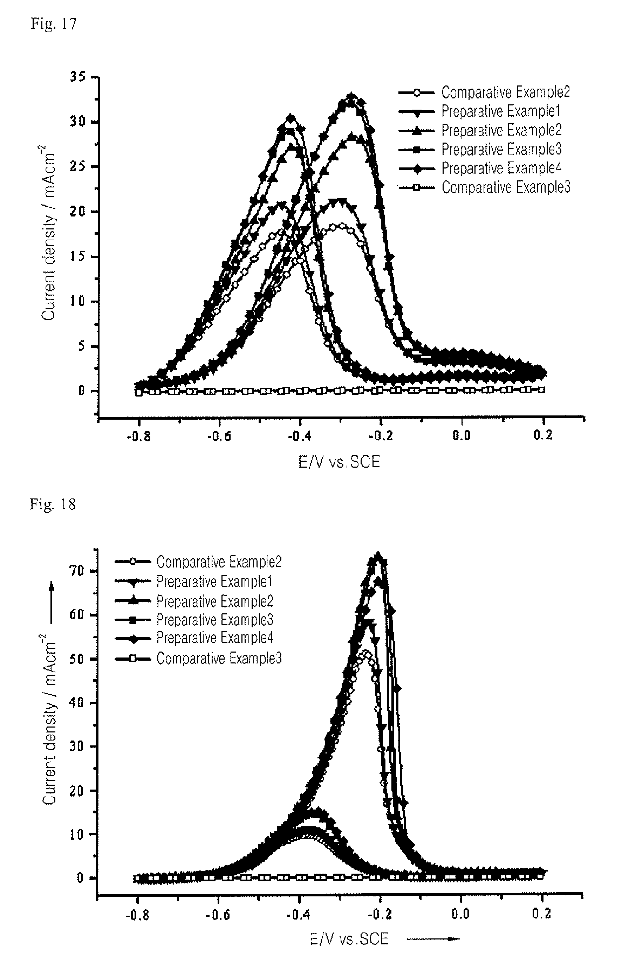

Figs. 17 and 18 are cyclic voltammetry graphs according to oxidation of ethanol (Fig. 17) and methanol (Fig. 18) of an ATO nanowire-Pt/C mixed catalyst in an alkali atmosphere.

Referring to Figs. 17 and 18, the ATO nanowire-Pt/C mixed catalysts (Preparative Examples 1 to 4) had a maximum current density about 80% higher upon ethanol oxidation, and a maximum current density 50% higher upon methanol oxidation than those of the mono Pt/C catalyst (Comparative Example 2). Thus, it could be seen that the ATO nanowire-Pt/C mixed catalysts had superior alcohol oxidation activity to the mono Pt/C catalyst. Meanwhile, since activity was not observed for the catalyst using only the ATO nanowire (Comparative Example 3), it could be seen that activity increase of the ATO nanowire-Pt/C mixed catalysts resulted from high charge transport capabilities of the ATO nanowires. Further, the current density increase in the sequence from Preparative Example 1 to 4, and this phenomenon means that activity of the electrode catalyst also increased with increasing amount of the ATO nanowires, which resulted in improved charge transport capabilities.

Further, cyclic voltammetry was measured by the same method without containing alcohol (ethanol or methanol) in the electrolyte.

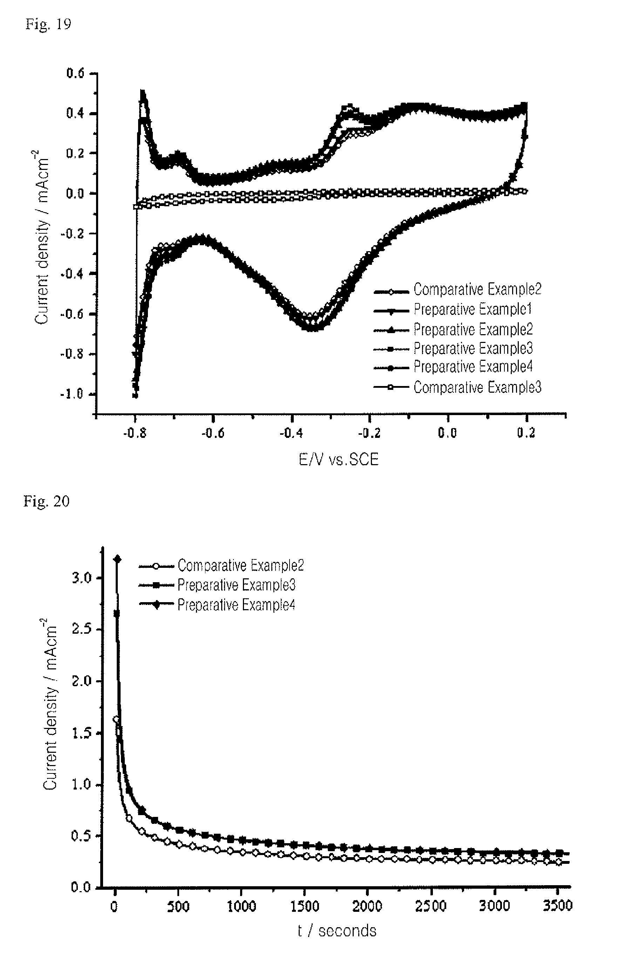

Fig. 19 is a cyclic voltammetry graph for measuring hydrogen adsorption/desorption capability of an ATO nanowire-Pt/C mixed catalyst in an alkali atmosphere.

Table 1 shows the quantity of electric charges calculated from the cyclic voltammetry graph of Fig. 11.

Table 1

| Catalyst | $Q_{hydrogen\ desorption}$ (mC/cm$^2$) | $Q_{hydrogen\ adsorption}$ (mC/cm$^2$) | $Q_{Average}$ (mC/cm$^2$) | $Q_{average}$ for Comparative Example 2 (%) |
|---|---|---|---|---|
| Comparative Example 2 | 0.342 | 0.265 | 0.304 | 100 |
| Preparative Example 1 | 0.984 | 0.337 | 0.366 | 120.4 |
| Preparative Example 2 | 0.433 | 0.475 | 0.454 | 149.3 |
| Preparative Example 3 | 0.422 | 0.479 | 0.451 | 148.4 |
| Preparative Example 4 | 0.479 | 0.541 | 0.510 | 167.7 |
| Comparative Example 3 | - | 0.04 | - | - |

Referring to Fig. 19 and Table 1, it could be seen that the ATO nanowire-Pt/C mixed catalysts (Preparative Examples 1 to 4) had a higher quantity of electric charges than the mono Pt/C catalyst (Comparative Example 2), and a higher amount of highly conductive ATO nanowires generally resulted in increase in the quantity of electric charges.

<Analysis Example 3: Electrostatic analysis for evaluation of stability of electrode catalyst >

Electrostatic analysis was carried out using a three-electrode cell, and one of the catalyst inks prepared in Preparative Examples 3 and 4 and Comparative Example 2 was deposited and dried on a working electrode, followed by analysis. Drying was carried out at 70°C for 1 hour.

The electrolyte was prepared by mixing potassium hydroxide (alkali atmosphere) or sulfuric acid (acid atmosphere) with ethanol or methanol in deionized water, and scanning was carried out at a constant potential of -0.3V vs. SCE for 3600 seconds.

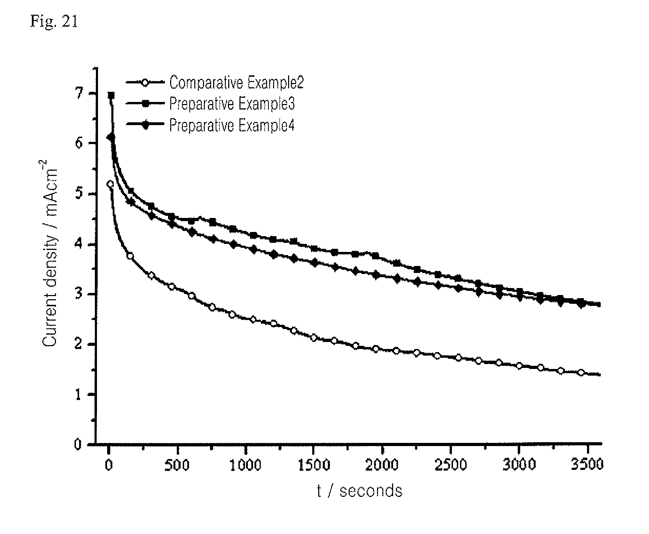

Figs. 20 and 21 are electrostatic graphs according to oxidation of ethanol (Fig. 20) and methanol (Fig. 21) of an ATO nanowire-Pt/C mixed catalyst in an alkali atmosphere.

Referring to Figs. 20 and 21, it could be seen that the ATO nanowire-Pt/C mixed catalysts (Preparative Examples 3 and 4) exhibited higher current densities over time than the mono Pt/C catalyst (Comparative Example 2), and that the ATO nanowires improved stability of the electrode catalysts.

Although some exemplary embodiments have been described with reference to the accompanying drawings, it will be understood by a person having ordinary knowledge in the art that the present invention is not limited to these embodiments, and various modifications, changes, alterations, and equivalent embodiments can be made without departing from the spirit and scope of the invention.

[Description of Reference numerals]

| | | | |
|---|---|---|---|
| 200: | electrospinning device | 210: | syringe |
| 220: | syringe pump | 230: | high voltage generator |
| 240: | collector | 300: | fuel cell electrode |
| 310: | electrode matrix | 320: | catalyst layer |
| 322: | active metal nanoparticle layer | 324: | metal oxide nanowire |
| 400: | fuel cell | 410: | anode |
| 420: | cathode | 430: | electrolyte |
| 440: | external circuit | | |

**Claims**

1. A method for manufacturing a mixed catalyst containing a metal oxide nanowire, comprising:

   preparing a polymer solution containing a first metal precursor and a second metal precursor;
   electrospinning the polymer solution to forum a metal-polymer nanowire;
   heat treating the metal-polymer nanowire to form a metal oxide nanowire; and
   mixing the metal oxide nanowire with active metal nanoparticles,
   the metal of the second metal precursor being used as a dopant for the metal oxide nanowire.

2. The method according to claim 1, wherein the first metal precursor comprises at least one metal selected from Sn, Ti, Zn, Ni, Co, Mn, Nb, Mo, V, Cr, Fe, Ru, In, Al, Sb, Ta, and Eu.

3. The method according to claim 1, wherein the second metal precursor comprises at least one metal selected from Pt, Pd, Au, Ag, Rh, Os, Ir, Sn, Ti, Zn, Ni, Co, Mn, Nb, Mo, V, Cr, Fe, Ru, In, Al, Sb, Ta, and Eu.

4. The method according to claim 1, wherein the active metal nanoparticles comprise any one component selected from Pt, Au, Ag, Fe, Co, Ni, Ru, Os, Rh, Pd, Ir, W, Sn, Pd, Bi, and mixtures thereof.

5. The method according to claim 1, wherein the active metal nanoparticles are porous carbon nanoparticles supporting an active metal.

6. The method according to claim 1, wherein the polymer of the polymer solution comprises any one selected from polyvinylpyrrolidone, polyvinyl butyral, polyvinyl acetate, polyacrylonitrile, polycarbonate, and mixtures thereof.

7. The method according to claim 1, wherein the first metal precursor is a tin (Sn) salt and the second metal precursor is an antimony (Sb) salt.

8. An electrode for fuel cells comprising:

   an electrode matrix; and
   a catalyst layer formed on the electrode matrix,
   wherein the catalyst layer comprises an active metal nanoparticle layer and a metal oxide nanowire inserted into the active metal nanoparticle layer, the metal oxide nanowire being prepared by doping with a heterogeneous metal.

9. The electrode for fuel cells according to claim 8, wherein the electrode matrix is any one selected from carbon paper, carbon cloth, and carbon felt.

10. The electrode for fuel cells according to claim 8, wherein the metal oxide nanowire comprises at least one metal selected from Sn, Ti, Zn, Ni, Co, Mn, Nb, Mo, V, Cr, Fe, Ru, In, Al, Sb, Ta, and Eu.

11. The electrode for fuel cells according to claim 8, wherein the heterogeneous metal comprises at least one metal selected from Pt, Pd, Au, Ag, Rh, Os, Ir, Sn, Ti, Zn, Ni, Co, Mn, Nb, Mo, V, Cr, Fe, Ru, In, Al, Sb, Ta, and Eu.

12. The electrode for fuel cells according to claim 8, wherein active metal nanoparticles of the active metal nanoparticle layer comprise any one component selected from Pt, Au, Ag, Fe, Co, Ni, Ru, Os, Rh, Pd, Ir, W, Sn, Pd, Bi, and mixtures thereof.

13. The electrode for fuel cells according to claim 8, wherein active metal nanoparticles of the active metal nanoparticle layer are porous carbon nanoparticles supporting an active metal.

14. The electrode for fuel cells according to claim 8, wherein the metal oxide nanowire is a tin oxide nanowire, and the heterogeneous metal is antimony.

15. A fuel cell comprising:

   an anode and a cathode facing each other; and

an electrolyte interposed between the anode and the cathode,
at least one of the anode and the cathode being the electrode for fuel cells according to any one of claims 8 to 14.

Fig. 1

| Preparing polymer solution containing first metal precursor and second metal precursor | ~ S10 |

↓

| Electrospinning polymer solution to form metal-polymer nanowire | ~ S12 |

↓

| Heat treating metal-polymer nanowire to form metal oxide nanowire | ~ S14 |

↓

| Mixing metal oxide nanowire with active metal nanoparticles | ~ S16 |

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Legend:
- Comparative Example2
- Preparative Example1
- Preparative Example2
- Preparative Example3
- Preparative Example4
- Comparative Example3

X-axis: E/V vs.SCE
Y-axis: Current density / mAcm$^{-2}$

Fig. 20

Legend:
- Comparative Example2
- Preparative Example3
- Preparative Example4

X-axis: t / seconds
Y-axis: Current density / mAcm$^{-2}$

Fig. 21